# EUROPEAN PATENT APPLICATION

(11) **EP 3 981 962 A1**
(43) Date of publication of application: **13.04.2022**
(21) Application number: 20201055.9
(22) Date of filing: 09.10.2020
(51) Int. Cl.: F02B 37/00, F02B 37/013, F02C 6/12

(54) **MULTISTAGE TURBOCHARGING ASSEMBLY AND METHOD OF OPERATING A MULTISTAGE TURBOCHARGING ASSEMBLY**

(71) Applicant: ABB Switzerland Ltd., 5400 Baden (CH)
(72) Inventor: ZUCCHELLI, Alessandro, 5400 Baden (CH); RECHIN, Thomas, 5400 Baden (CH); ALBIEZ, Bernd, 79736 Rickenbach (DE); HÄGE, Christoph, 79618 Rheinfelden (DE)
(74) Representative: Zimmermann & Partner Patentanwälte mbB

(57) **Abstract**

A multistage turbocharging assembly (100) is described. The multistage turbocharging assembly (100) includes a first stage (110) including a first turbine (113) coupled with a first compressor (114) via a first shaft (101). Further, the multistage turbocharging assembly (100) includes a second stage (120) including a second turbine (123) coupled with a second compressor (124) via a second shaft (102). The first compressor (114) and the second turbine (123) are arranged on a first side (111) of the multistage turbocharging assembly (100). The second compressor (124) and the first turbine (113) are arranged on a second side (112) of the multistage turbocharging assembly (100). Additionally, a method of operating a multistage turbocharging assembly is described.

## Description

### TECHNICAL FIELD

Embodiments of the present disclosure relate to multi-stage turbocharging assemblies having one or more first stages and one or more second stages, particularly one or more high-pressure stages and one or more low-pressure stages.

### BACKGROUND

Multi-stage turbochargers include separate turbocharger assemblies interconnected to each other and to an engine charge-air path. The turbine housings are connected by exhaust piping which allows the flowing of hot gasses: directing engine exhaust firstly to the inlet of a high-pressure turbine, then directing the flow through the outlet of high-pressure turbine to the inlet of low-pressure turbine and, finally, through the outlet path to the environment using exhaust manifolds. This type of architecture requires large assemblies' footprints (i.e. the space required for mounting of an assembled unit) on an engine installation, as well as multiple piping connections, bellows, supports, couplings, insulations and structural enhancement brackets aimed at reducing piping vibrations and preventing failure modes. Further, such an arrangement is of considerable complexity in terms of components assemblies, bill of materials, and service. On onboard engine assemblies, where spacing is of prime values, efforts to reduce the overall footprints of multi-stage turbocharges are made. Also, due to the general high temperature of the turbine casings and their relative connecting pipes, bulky heat shields and insulations are used.

In the state of the art, the multi stage turbocharger is assembled onto an engine platform, receiving the exhaust gasses from the cylinder heads banks. The exhaust gasses are collected, directed into the turbocharge turbine stages, and existed via exhaust piping. To facilitate the passage of the exhaust gases to the outlets, the use of exhaust pipes, with T-pieces, bends and various connecting bellows are used. This leads to complex exhaust piping assemblies, routes and supporting brackets, susceptible to efficiencies losses as well as potential leakages from the various connections and individual component thermal expansions and vibration breakages.

Accordingly, in view of the above, there is a demand for improved multistage turbocharging assemblies which at least partially overcome some of the problems of the state of the art.

### SUMMARY

In light of the above, a multistage turbocharging assembly and a method of operating a multistage turbocharging assembly according to the independent claims are provided. Further aspects, advantages, and features are apparent from the dependent claims, the description, and the accompanying drawings.

According to an aspect of the present disclosure, a multistage turbocharging assembly is provided. The multistage turbocharging assembly includes a first stage including a first turbine coupled with a first compressor via a first shaft. Additionally, the multistage turbocharging assembly includes a second stage including a second turbine coupled with a second compressor via a second shaft. The first compressor and the second turbine are arranged on a first side of the multistage turbocharging assembly. The second compressor and the first turbine are arranged on a second side of the multistage turbocharging assembly.

Accordingly, compared to the state of the art, an improved multistage turbocharging assembly can be provided. In particular, the multistage turbocharging assembly according to embodiments described herein provides for the advantage that an exhaust gas entry and a gas exit of the multistage turbocharging assembly can be provided on opposed sides of the multistage turbocharging assembly. Further, as compared to the state of the art, the multistage turbocharging assembly as described herein beneficially provides for the possibility to implement a simplified exhaust gas outlet routing. A further advantage is that a simplified gas passage across the stages of the multistage turbocharging assembly can be provided. More specifically, the layout principle of the multistage turbocharging assembly according to the present disclosure allows for the possibility to provide a simplified gas passage construct, particularly a simplified gas passage casing, for example by separating the casing of the compressor stages. The provision of separate compressor casings can beneficially facilitate service and maintenance operations.

According to a further aspect of the present disclosure, a method of operating a multistage turbocharging assembly is provided. The method includes providing an exhaust gas flow from an exhaust gas inlet of a second turbine to an exhaust gas outlet of a first turbine. Further, the method includes providing an air flow from a first compressor inlet of a first compressor to a second compressor outlet of a second compressor. The first compressor and the second turbine are arranged on a first side of the multistage turbocharging assembly. The second compressor and the first turbine are arranged on a second side of the multistage turbocharging assembly. In particular, the method of operating a multistage turbocharging assembly typically includes employing the multistage turbocharging assembly according to any embodiments described herein.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Fig. 1: shows a schematic view of a multistage turbocharging assembly according to embodiments described herein; and
- Figs. 2 and 3: show schematic views of a turbocharging assembly according to further embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

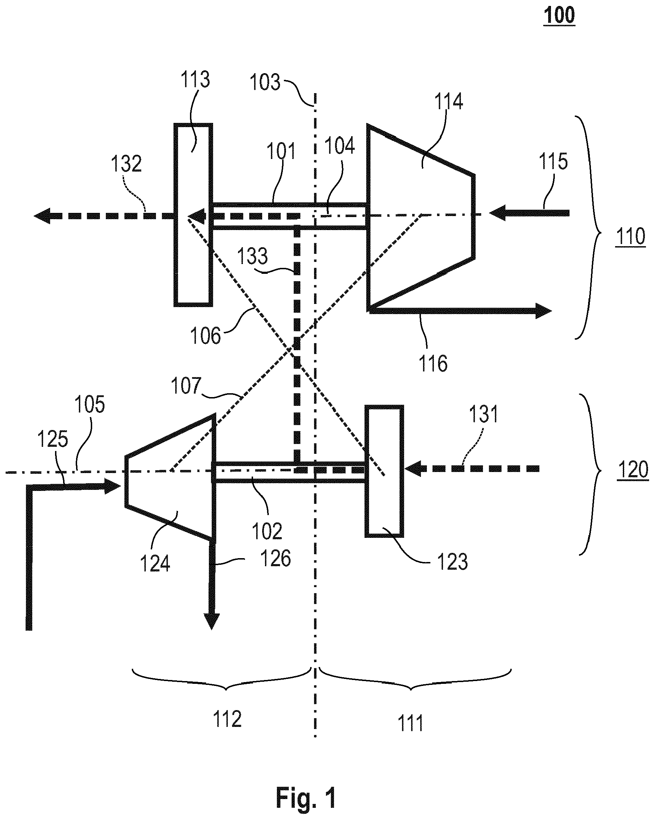

With exemplary reference to Fig. 1, a multistage turbocharging assembly 100 according to the present disclosure is described. According to embodiments, which can be combined with other embodiments described herein, the multistage turbocharging assembly 100 includes a first stage 110 and a second stage 120. The first stage 110 includes a first turbine 113 and a first compressor 114. The first turbine 113 is coupled with the first compressor 114 via a first shaft 101. The second stage 120 includes a second turbine 123 and a second compressor 124. The second turbine 123 is coupled with the second compressor 124 via a second shaft 102. The first compressor 114 and the second turbine 123 are arranged on a first side 111 of the multistage turbocharging assembly 100. The second compressor 124 and the first turbine 113 are arranged on a second side 112 of the multistage turbocharging assembly 100.

Accordingly, compared to the state of the art, an improved multistage turbocharging assembly can be provided. In particular, the multistage turbocharging assembly according to embodiments described herein provides for the advantage that an exhaust gas entry and a gas exit of the multistage turbocharging assembly can be provided on opposed sides of the multistage turbocharging assembly. Further, as compared to the state of the art, the multistage turbocharging assembly as described herein beneficially provides for the possibility to implement a simplified exhaust gas outlet routing. A further advantage is that a simplified gas passage across the stages of the multistage turbocharging assembly can be provided. More specifically, the layout principle of the multistage turbocharging assembly according to the present disclosure allows for the possibility to provide a simplified gas passage construct, particularly a simplified gas passage casing, for example by separating the compressor stages housing. The provision of separate compressor housing can beneficially facilitate service and maintenance operations.

In particular, the first side and the second side of the multistage turbocharging assembly 100 are volumes separated by a virtual dividing plane 103 dividing the multistage turbocharging assembly 100 into two sides, namely the first side 111 and the second side 112. Accordingly, it is to be understood that the first side 111 is a three-dimensional space separated by the virtual dividing plane 103 from the second side 112 being a three-dimensional space.

Accordingly, as exemplarily shown in FIG. 1, typically the assembly of the first stage 110, i.e. the first turbine 113 coupled with the first compressor 114 via the first shaft 101, is counter posed with respect to the assembly of the second stage 120, i.e. the second turbine 123 coupled with the second compressor 124 via the second shaft 102. According to a non-limiting example, the first shaft 101 and the second shaft 102 can be parallel to each other, as exemplarily shown in FIG. 1. However, alternatively the first shaft 101 and the second 102 can be arranged non-parallel with respect to each other. For example, the axis of the first shaft 101 may be rotated within a first plane 104 including the axis of the first shaft 101. In other words, the axis of the first shaft 101 can be coplanar with the first plane 104. In particular, the axis of the first shaft 101 may be rotated around an axis being perpendicular to the axis of the first shaft 101.

Similarly, the axis of the second shaft 102 may be rotated within a second plane 105 including the axis of the second shaft 102. In other words, the axis of the second shaft 102 can be coplanar with the second plane 105.In particular, the axis of the second shaft 102 may be rotated around an axis being perpendicular to the axis of the second shaft 102.

For example, the first plane 104 and the second plane 105 can be parallel, as exemplarily shown in FIG. 1. Further, typically the dividing plane 103 intersects the first plane 104 and the second plane 105. For instance, the dividing plane 103 may intersect the first plane 104 and/or the second plane 105 perpendicularly.

As exemplarily shown in Figs. 1 to 3, according to embodiments, which can be combined with other embodiments described herein, the first turbine 113 and the second turbine 123 are transversally arranged with respect to each other. Typically, the first compressor 114 and the second compressor 124 are transversally arranged with respect to each other. Accordingly, as exemplarily shown in FIG. 1, it is to be understood that a first virtual line 106 connecting the first turbine 113 and the second turbine 123 intersects a second virtual line 107 connecting the first compressor 114 and the second compressor 124.

As exemplarily shown in Figs. 1 to 3, according to embodiments, which can be combined with other embodiments described herein, the second turbine 123 is connected with the first turbine 113 via a gas passage 133. Typically, the gas passage 133 is a flow optimized gas passage. More specifically, as exemplarily shown in Fig. 1, exhaust gas may be provided to the second turbine 123 via an exhaust gas inlet 131, after having passed the second turbine 123 the exhaust gas is guided to the first turbine 113 via the a gas passage 133, and after having passed the first turbine 113, the exhaust gas is ejected through an exhaust gas outlet 132.

In particular, the gas passage 133 is provided by a gas passage casing 134. Typically, the gas passage casing 134 is made of casted material. The gas passage casing may be a separate component. In other words, the gas passage casing may be a separate casing configured for providing the gas passage from the second turbine 123 to the first turbine 113. More specifically, the gas passage casing 134 can be a transverse gas passage casing. A "transverse gas passage casing" can be understood in that the casing is configured for providing the gas passage from a second turbine 123 to a transversally arranged first turbine 113 as described herein.

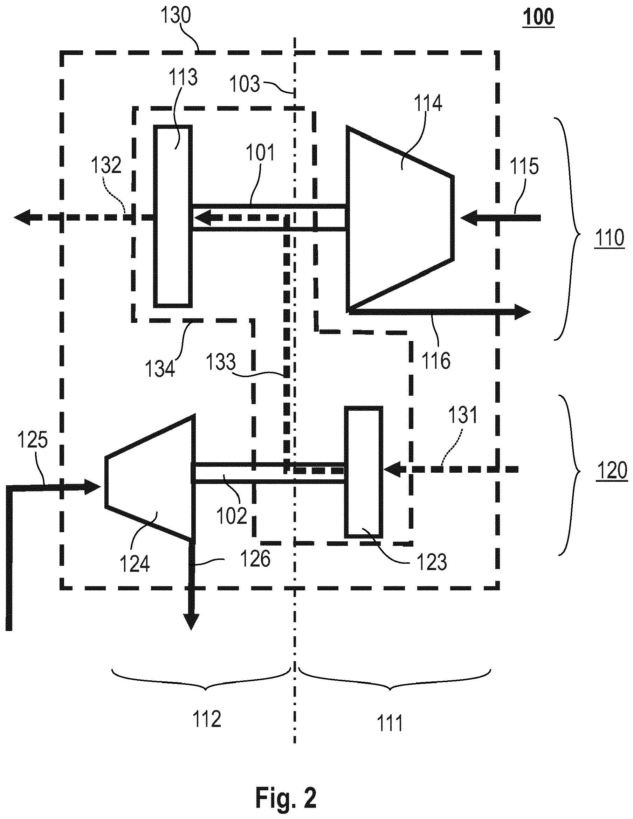

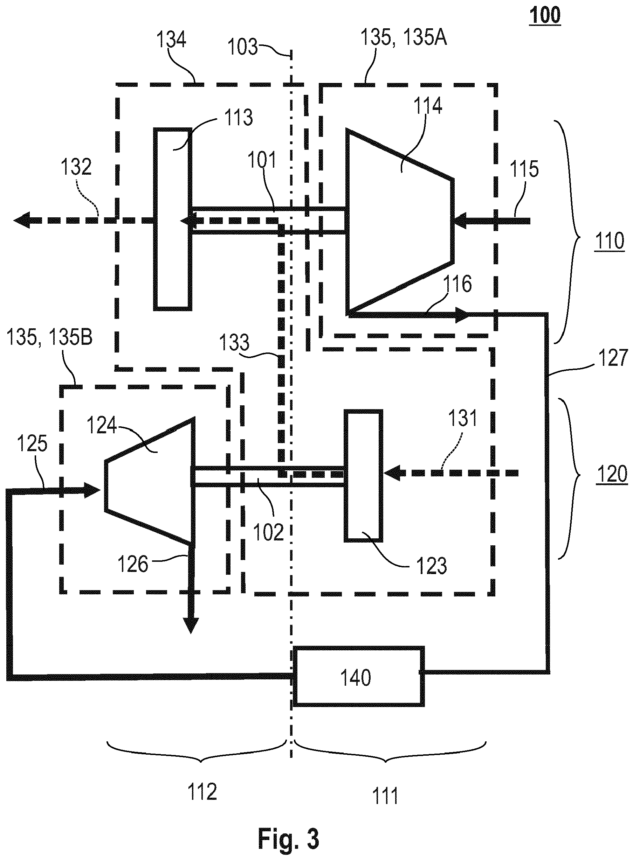

According to embodiments, which can be combined with other embodiments described herein, the gas passage casing 134 may enclose at least one of the first turbine 113 and the second turbine 123. Although, Figs. 2 and 3 show examples in which the gas passage casing 134 encloses both the first turbine 113 and the second turbine 123, it is to be understood that alternatively the gas passage casing 134 may only enclose the gas passage 133, or the gas passage 133 and the first turbine 113, or the gas passage 133 and the second turbine 123.

With exemplary reference to Fig. 3, according to embodiments, which can be combined with other embodiments described herein, the multistage turbocharging assembly 100 further includes a compressor casing 135 enclosing at least one of the first compressor 114 and the second compressor 124. For example, the compressor casing 135 may be a single unit. The compressor casing 135 may include a first compressor casing 135A enclosing the first compressor 114. Further, the compressor casing 135 may include a second compressor casing 135B enclosing the second compressor 124. Accordingly, it is to be understood that the first compressor casing 135A and the second compressor casing 135B can be separate casings or provided by an integral single casing.

With exemplary reference to Fig. 2, according to embodiments, which can be combined with other embodiments described herein, the multistage turbocharging assembly 100 includes a casing 130 enclosing the first stage 110 and the second stage 120. The casing 130 can be a single unit. In particular, the casing 130 can be an integral one piece structure, for instance of casted material. Alternatively, the casing 130 can be comprised of two or more casing parts. The two or more casing parts can be made of casted material.

According to embodiments, which can be combined with other embodiments described herein, the gas passage casing 134 is integrated in the casing 130. From Fig. 2 it is to be understood, that typically the casing 130 is a main casing of the multistage turbocharging assembly 100. The main casing 130 may provide the compressor casing 135. More specifically, the main casing 130 may provide the first compressor casing 135A and/or the second compressor casing 135A. In other words, the first compressor casing 135A and/or the second compressor casing 135A may be integrated in the main casing 130.

As exemplarily shown in Figs. 1 to 3, typically the first compressor 114 is provided with a first compressor inlet 115 and a first compressor outlet 116. Typically, the second compressor 124 is provided with a second compressor inlet 125 and a second compressor outlet 126. With exemplary reference to Fig. 3, according to embodiments, which can be combined with other embodiments described herein, the first compressor outlet 116 is connected with the second compressor inlet 125 via an air flow connection 127. In particular, the air flow connection 127 may include a cooler 140, as schematically shown in FIG. 3.

According to embodiments, which can be combined with other embodiments described herein, the first stage 110 is configured for a different operating pressure than the second stage 120. For instance, the first stage 110 can be a low-pressure stage and the second stage 120 can be a high-pressure stage. In particular, the first turbine 113 may be a low-pressure turbine and the first compressor 114 may be a low-pressure compressor. The second turbine 123 may be a high-pressure turbine and the second compressor 124 may be a high-pressure compressor.

Alternatively, the first stage 110 can be a high-pressure stage and the second stage 120 can be a low-pressure stage. Accordingly, the first turbine 113 may be a high-pressure turbine and the first compressor 114 may be a high-pressure compressor, the second turbine 123 may be a low-pressure turbine and the second compressor 124 may be a low-pressure compressor.

Accordingly, the multi-stage turbocharging assembly as described herein can be understood as a turbocharging assembly having one or more high-pressure stages and/or one or more low-pressure stages. The one or more high-pressure stages have a high-pressure turbine coupled with a high-pressure compressor. The one or more low-pressure stages have a low-pressure turbine coupled with a low-pressure compressor.

According to a further aspect of the present disclosure, a method of operating a multistage turbocharging assembly 100 is provided. As exemplarily shown in Fig. 1, according to embodiments, which can be combined with other embodiments described herein, the method includes providing an exhaust gas flow from an exhaust gas inlet 131 of a second turbine 123 to an exhaust gas outlet 132 of a first turbine 113. Further, the method includes providing an air flow from a first compressor inlet 115 of a first compressor 114 to a second compressor outlet 126 of a second compressor 124. The first compressor 114 and the second turbine 123 are arranged on a first side 111 of the multistage turbocharging assembly 100. The second compressor 124 and the first turbine 113 are arranged on a second side 112 of the multistage turbocharging assembly 100.

As exemplarily indicated in Figs. 1 to 3, according to embodiments, which can be combined with other embodiments described herein, providing the exhaust gas flow from the exhaust gas inlet 131 of the second turbine 123 to the exhaust gas outlet 132 of the first turbine 113 includes providing the exhaust gas flow through a gas passage casing 134. The gas passage casing 134 provides a gas passage 133 connecting the second turbine 123 with the first turbine 113.

In particular, it is to be understood that the method of operating a multistage turbocharging assembly includes using the multistage turbocharging assembly according to embodiments described herein.

While the foregoing is directed to embodiments, other and further embodiments may be devised without departing from the basic scope, and the scope is determined by the claims that follow.

### REFERENCE NUMBERS

- 100: multi-stage turbocharging assembly
- 101: first shaft
- 102: second shaft
- 103: virtual dividing plane
- 104: first plane
- 105: second plane
- 106: first virtual line
- 107: second virtual line
- 110: first stage / low-pressure stage
- 111: first side of multi-stage turbocharging assembly
- 112: second side of multi-stage turbocharging assembly
- 113: first turbine / low pressure turbine
- 114: first compressor / low pressure compressor
- 115: first compressor inlet / low pressure compressor inlet
- 116: first compressor outlet / low pressure compressor outlet
- 120: second stage / high-pressure stage
- 123: second turbine / high-pressure turbine
- 124: second compressor / high-pressure compressor
- 125: second compressor inlet / high pressure compressor inlet
- 126: second compressor outlet / high pressure compressor outlet
- 127: air flow connection
- 130: casing
- 131: exhaust gas inlet
- 132: exhaust gas outlet
- 133: gas passage
- 134: gas passage casing
- 135: compressor casing
- 135A: first compressor casing
- 135B: second compressor casing
- 140: cooler

## Claims

1. A multistage turbocharging assembly (100), comprising
- a first stage (110) comprising a first turbine (113) coupled with a first compressor (114) via a first shaft (101);
- a second stage (120) comprising a second turbine (123) coupled with a second compressor (124) via a second shaft (102), wherein the first compressor (114) and the second turbine (123) are arranged on a first side (111) of the multistage turbocharging assembly (100), and wherein the second compressor (124) and the first turbine (113) are arranged on a second side (112) of the multistage turbocharging assembly (100).

2. The multistage turbocharging assembly (100) according to claim 1, wherein the first turbine (113) and the second turbine (123) are transversally arranged with respect to each other.

3. The multistage turbocharging assembly (100) according to claim 1 or 2, wherein the first compressor (114) and the second compressor (124) are transversally arranged with respect to each other.

4. The multistage turbocharging assembly (100) according to any of claims 1 to 3, wherein the second turbine (123) is connected with the first turbine (113) via a gas passage (133).

5. The multistage turbocharging assembly (100) according to claim 4, wherein the gas passage (133) is provided by a gas passage casing (134), particularly a transverse gas passage casing.

6. The multistage turbocharging assembly (100) according to claim 5, wherein the gas passage casing (134) encloses at least one of the first turbine (113) and the second turbine (123).

7. The multistage turbocharging assembly (100) according to any of claims 1 to 6, further comprising a compressor casing (135) enclosing the first compressor (114) and the second compressor (124).

8. The multistage turbocharging assembly (100) according to claim 7, wherein the compressor casing (135) is a single unit, or wherein the compressor casing (135) comprises a first compressor casing (135A) enclosing the first compressor (114) and a second compressor casing (135B) enclosing the second compressor (124).

9. The multistage turbocharging assembly (100) according to any of claims 1 to 8, further comprising a casing (130) enclosing the first stage (110) and the second stage (120), wherein the casing (130) is a single unit or is comprised of two or more casing parts.

10. The multistage turbocharging assembly (100) according to any of claims 1 to 4 in combination with claims 5 and 9 or according to any of claims 6 to 8 in combination with claims 5 and 9, wherein the gas passage casing (134) is integrated in the casing (130).

11. The multistage turbocharging assembly (100) according to any of claims 1 to 10, wherein a first compressor outlet (116) is connected with a second compressor inlet (125) via an air flow connection (127), particularly the air flow connection (127) comprising a cooler (140).

12. The multistage turbocharging assembly (100) according to any of claims 1 to 11, wherein the first stage (110) is configured for a different operating pressure than the second stage (120).

13. The multistage turbocharging assembly (100) according to any of claims 1 to 12, wherein the first stage (110) is a low-pressure stage, particularly the first turbine (113) being a low-pressure turbine and the first compressor (114) being a low-pressure compressor, and wherein the second stage (120) is a high-pressure stage, particularly the second turbine (123) being a high-pressure turbine and the second compressor (124) being a high-pressure compressor.

14. A method of operating a multistage turbocharging assembly (100), comprising providing an exhaust gas flow from an exhaust gas inlet (131) of a second turbine (123) to an exhaust gas outlet (132) of a first turbine (113); and
providing an air flow from a first compressor inlet (115) of a first compressor (114) to a second compressor outlet (126) of a second compressor (124), wherein the first compressor (114) and the second turbine (123) are arranged on a first side (111) of the multistage turbocharging assembly (100), and wherein the second compressor (124) and the first turbine (113) are arranged on a second side (112) of the multistage turbocharging assembly (100).

15. The method of claim 14, wherein providing the exhaust gas flow from the exhaust gas inlet (131) of the second turbine (123) to the exhaust gas outlet (132) of the first turbine (113) comprises providing the exhaust gas flow through a gas passage casing (134) providing a gas passage (133) connecting the second turbine (123) with the first turbine (113).
